# FASCICULE DE BREVET EUROPEEN

(11) **EP 2 883 688 B1**
(45) Date de publication et mention de la délivrance du brevet: **22.09.2021**
(21) Numéro de dépôt: 13197094.9
(22) Date de dépôt: 13.12.2013
(51) Int. Cl.: B29C 70/48, B29D 99/00, B29C 70/76, F01D 25/24, F01D 25/00

(54) **Carter annulaire composite de compresseur de turbomachine et procédé d'obtention de celui-ci**
Ringförmiges Verbundwerkstoffgehäuse für einen Turbomaschinenkompressor und Verfahren zu seiner Herstellung
Composite annular casing of a turbomachine compressor and method for its manufacture

(43) Date de publication de la demande: 17.06.2015
(73) Titulaire: Safran Aero Boosters SA, 4041 Herstal (BE)
(72) Inventeur: Hannecart, Benoît, 4650 Herve (BE)
(74) Mandataire: Lecomte & Partners

(56) Documents cités:
- EP-A1- 1 938 953
- EP-A1- 2 077 183
- WO-A1-2012/166263
- US-A- 5 639 535

## Description

### Domaine technique

L'invention a trait à un carter annulaire externe composite de turbomachine axiale. Plus précisément, l'invention a trait à un carter annulaire composite de turbomachine axiale présentant une paroi circulaire, une bride annulaire radiale une arête vive à leur jonction ; le composite comprenant une préforme fibreuse. L'invention a également trait à une turbomachine axiale comprenant un carter annulaire composite. L'invention a également trait à un procédé de fabrication d'un carter annulaire composite de turbomachine axiale.

### Technique antérieure

Dans le but d'alléger une turbomachine, certains de ses éléments conventionnellement produits en métal peuvent l'être en un matériau composite. Des éléments structurants tels des supports, des carters peuvent être produits en un matériau composite. En particulier, un carter externe de compresseur, notamment basse pression, peut être produit en un matériau composite.

Un tel carter présente généralement une portion cylindrique qui supporte des rangées annulaires d'aubes, et des brides annulaires de fixation qui s'étendent radialement. Les brides permettent le montage du carter de compresseur sur un carter intermédiaire de soufflante, et la fixation d'un bec annulaire de séparation. La surface interne du carter permet de guider le flux annulaire le long du compresseur, et doit à cet effet présenter une surface lisse ; sans ressauts. Cette contrainte impose de réaliser des arêtes vives au niveau des brides de fixations.

Un carter externe composite de compresseur peut être réalisé à partir d'une préforme densifiée par une matrice. La préforme peut être formée d'un empilement de feuilles fibreuses empilées les unes sur les autres, les feuilles s'étendant à la fois sur la portion cylindrique et sur les brides de fixation. Une fois mise en forme, la préforme est disposée dans un moule d'injection présentant des arêtes pour reproduire la forme voulue du carter. Or, la préforme empilée forme un arrondi au niveau de l'arête du moule et laisse subsister une espace vide à cet endroit. Lors de l'injection, l'espace est rempli par la résine sans être renforcé par des fibres. Par conséquent, le carter composite présente une faiblesse à cet endroit.

Il est connu du document GB 2486231 A un outil pour la mise en forme d'une préforme de carter composite de turbomachine, le carter présentant des brides annulaires radiales à ses extrémités amont et aval. La préforme comprend un empilement de plis qui sont mis en forme dans l'outil de mise en forme, de sorte à générer les brides annulaires. Afin de limiter l'apparition d'un arrondi de la préforme sous les brides lors de sa mise en forme, l'outil comprend des blocs mobiles façonnant les brides ; la préforme étant disposée au préalable dans une membrane dans laquelle est créée une aspiration. Cet enseignement permet de s'approcher d'une géométrie souhaitée, cependant elle nécessite un outillage onéreux. Par ailleurs, l'arrondi occupé par la préforme dépend de l'épaisseur du pli inférieur. L'arrondi peut se déformer à cause de l'aspiration.

Le document EP 1 900 502 A1 divulgue un composant composite annulaire de turbomachine. Le composant présente un corps annulaire et des brides annulaires aux extrémités, et des arêtes annulaires vives à l'intérieur des brides. Le composant composite comprend plusieurs renforts fibreux dont l'un est effiloché au niveau des arêtes de sorte à y répartir les fibres dans les jonctions entre les brides et le corps annulaire. L'enseignement de ce document permet de répartir des fibres dans les jonctions, mais provoque une hétérogénéité de densité de fibres. Cette hétérogénéité réduit la résistance mécanique du composant composite, et en particulier face à un effort de flexion appliqué à une bride. Le document EP2077183 A1 divulgue un procédé de réalisation d'un carter composite. Le carter présente une paroi annulaire et une bride radiale dont la jonction présente une arête vive. Cette dernière est renforcée par une première structure fibreuse en contact de la structure fibreuse principale. Cette configuration préserve la structure principale lors d'usinages. Toutefois, la résistance même de l'arête reste limitée.

### Résumé de l'invention

### Problème technique

L'invention a pour objectif de résoudre au moins un des problèmes posés par l'art antérieur. L'invention a également pour objectif de renforcer une jonction annulaire entre une bride de fixation et une paroi circulaire d'un carter annulaire externe composite de turbomachine. L'invention a également pour objectif de renforcer au plus près une arête vive sous une bride annulaire du carter annulaire externe composite de turbomachine. Solution technique

L'invention a trait à un carter annulaire composite de turbomachine suivant la revendication 1, notamment de compresseur basse pression.

Selon un mode avantageux de l'invention, le noyau du renfort auxiliaire comprend un toron préférentiellement tressé ou tissé, éventuellement de manière tridimensionnelle.

Selon un mode avantageux de l'invention, la section transversale du noyau du renfort auxiliaire présente un profil généralement en triangle, éventuellement en triangle rectangle dont l'angle droit est disposé au niveau de l'arête vive.

Selon un mode avantageux de l'invention, le renfort principal et le renfort auxiliaire sont essentiellement en contact sur toute l'épaisseur radiale de la paroi et/ou sur toute l'épaisseur axiale de la bride de fixation.

Selon l'invention, le noyau du renfort auxiliaire comprend des fibres qui s'étendent radialement depuis l'arête jusqu'au renfort principal, préférentiellement le noyau du renfort auxiliaire présente une densité en fibres homogène perpendiculairement à son allongement.

Selon un mode avantageux de l'invention, la bride de fixation est une bride annulaire de fixation et/ou une bride axiale de fixation, préférentiellement le carter annulaire est un demi-carter annulaire s'étendant sur un demi-cercle qui comprend des brides axiales disposées latéralement sur la portion cylindrique et des brides annulaires opposées disposées aux extrémités axiales de la portion cylindrique.

Selon un mode avantageux de l'invention, les fibres du noyau du renfort auxiliaire s'étendent principalement parallèlement à l'arête, préférentiellement chaque portion de fibres du renfort auxiliaire (56) est inclinée par rapport à l'arête d'un angle inférieur à 40 °, plus préférentiellement inférieur à 20°.

Selon l'invention, le noyau du renfort auxiliaire comprend des fibres de même nature que le renfort principal, préférentiellement les fibres du renfort principal et du noyau du renfort auxiliaire sont de même longueur et/ou de même diamètre.

Selon un mode avantageux de l'invention, les fibres du renfort principal et du noyau du renfort auxiliaire sont imbriquées à l'interface entre le renfort principal et le renfort auxiliaire, préférentiellement les fibres des renforts sont agencées en faisceaux de fibres qui sont imbriqués au travers de l' interface.

Selon un mode avantageux de l'invention, le renfort principal et le noyau du renfort auxiliaire présentent chacun une densité de fibres homogène, préférentiellement le rapport des densités de fibres des renforts est compris entre 0,5 et 1,50 ; préférentiellement compris entre 0,80 et 1,20 ; plus préférentiellement compris entre 0,95 et 1,05.

Selon un mode avantageux de l'invention, la section du noyau est symétrique.

Selon un mode avantageux de l'invention, chaque portion de fibre du noyau est inclinée par rapport à l'axe d'allongement du carter d'un angle compris entre 50° et 130°, préférentiellement compris entre 60° et 120°, plus préférentiellement compris entre 75° et 105°.

Selon un mode avantageux de l'invention, le noyau épouse le renfort principal sur la majorité, préférentiellement sur toute la hauteur radiale du noyau.

Selon un mode avantageux de l'invention, le carter présente une continuité de matière entre la bride de fixation et la paroi.

Selon un mode avantageux de l'invention, l'enveloppe du noyau délimite un espace qui occupe au moins 15%, préférentiellement au moins 25 %, plus préférentiellement au moins 35% de la jonction entre la bride et la paroi du carter annulaire.

Selon un mode avantageux de l'invention, la matrice et le noyau forment l'arête vive.

Selon un mode avantageux de l'invention, le carter comprend une bride s'étendant perpendiculairement à la paroi.

L'invention a également trait à une turbomachine suivant la revendication 11.

Selon un mode avantageux de l'invention, la turbomachine comprend un carter intermédiaire de soufflante, un compresseur basse pression avec des rangées annulaires d'aubes statoriques et un bec de séparation, le carter annulaire comprenant une bride annulaire de fixation à chaque extrémité axiale, dont une bride amont et une bride aval, le carter annulaire présentant une réduction de rayon vers l'aval, préférentiellement le carter annulaire est une structure principale externe du compresseur sur laquelle sont fixées les rangées d'aubes, le bec de séparation via la bride amont, le carter intermédiaire de soufflante via la bride aval, le carter annulaire comprenant en outre une alternance de couches annulaires de matériau abradable et de surfaces annulaires de fixation d'aubes, le carter annulaire est formé de demi-coquilles séparées par un plan s'étendant axialement.

L'invention a également trait à un procédé, suivant la revendication 13, de fabrication d'un carter annulaire composite de turbomachine.

Selon un mode avantageux de l'invention, avant l'étape (b) de mise en place d'un renfort principal, ledit renfort est produit avec un arrondi destinée à venir en contact d'une surface de contact du renfort auxiliaire, préférentiellement à l'issue de l'étape (b) l'arrondi du renfort principal s' aplatit et la surface de contact du renfort auxiliaire s'incurve.

Selon un mode avantageux de l'invention, lors de l'étape (c) fermeture du moule d'injection, le renfort principal est compacté et/ou le renfort principal et le noyau se compactent mutuellement.

Selon un mode avantageux de l'invention, au moment de la fermeture du moule, le noyau épouse sur toute sa hauteur radiale la surface du moule qui forme la bride.

### Avantages apportés

L'invention permet de renforcer une arête vive de carter de turbomachine. La densité en fibre peut être homogène, ce qui optimise la résistance mécanique. La répartition des fibres de part et d'autre de l'arête peut être symétrique, ce qui améliore les propriétés mécaniques. Le procédé permet de réaliser une arête vive avec des côtes précises et une arête affutée, sans nécessiter d'usinage complémentaire.

### Brève description des dessins

La figure 1 représente une turbomachine axiale selon l'invention.
La figure 2 est un schéma d'un compresseur de turbomachine selon l'invention.
La figure 3 est un diagramme représentant le procédé de fabrication d'un carter selon l'invention.
La figure 4 schématise un renfort fibreux principal du carter selon l'invention.
La figure 5 illustre une coupe du renfort fibreux principal du carter selon l'invention suivant l'axe 5-5 tracé sur la figure 4.
La figure 6 schématise un renfort fibreux auxiliaire du carter selon l'invention.
La figure 7 représente l'étape du procédé de mise en place du renfort fibreux auxiliaire dans le moule selon l'invention.
La figure 8 représente l'étape du procédé de mise en place du renfort fibreux principal dans le moule selon l'invention.
La figure 9 représente un état intermédiaire du procédé où les renforts sont disposés dans le moule selon l'invention.
La figure 10 représente l'étape du procédé de fermeture du moule selon l'invention.
La figure 11 représente l'étape du procédé d'injection d'une résine dans le moule selon l'invention.
La figure 12 représente l'étape du procédé de démoulage du carter selon l'invention.

### Description des modes de réalisation

Dans la description qui va suivre, les termes intérieur ou interne et extérieur ou externe renvoient à un positionnement par rapport à l'axe de rotation d'une turbomachine axiale.

Dans la description qui va suivre, les termes intérieur ou interne et extérieur ou externe renvoient à un positionnement par rapport à l'axe de rotation d'une turbomachine axiale.

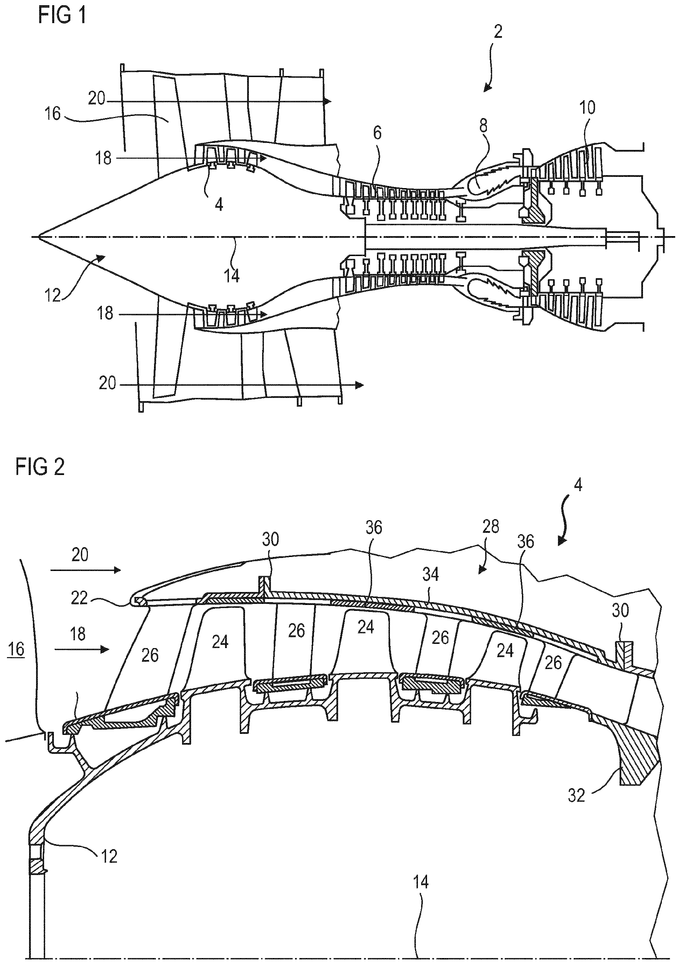

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par les carter de la turbomachine.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur comprend plusieurs redresseurs, en l'occurrence quatre, qui contiennent chacun une rangée d ' aubes statoriques 26. Les redresseurs sont chacun associé à une rangée d'aubes rotoriques pour redresser le flux d'air, de sorte à convertir la vitesse du flux en pression.

Le compresseur comprend au moins un carter 28. Le carter 28 peut présenter une forme généralement annulaire avec un profil de révolution autour de l'axe de rotation 14 de la turbomachine. Il peut être un carter externe et peut être réalisé en matériaux composites. Il peut être essentiellement plat. Le carter annulaire 28 peut comprendre des brides de fixation 30, par exemple des brides annulaires de fixation pour la fixation du bec de séparation 22 et/ou pour se fixer à un carter intermédiaire de soufflante 32 de la turbomachine. Les brides annulaires 30 peuvent comprendre des orifices de fixation (non représentés) pour permettre une fixation par boulons, ou par lockbolts.

La carter annulaire composite 28 peut comprendre une paroi généralement 34 circulaire ou en arc de cercle, dont les bords peuvent être délimités par les brides 30. La paroi 34 peut présenter une forme d'ogive, avec une variation de rayon le long de l'axe 14. Cette évolution du rayon peut s'inverser. La paroi 34 présente une surface intérieure avec une double courbure, l'une des courbures étant selon un plan axial, l'autre courbure étant selon un plan radial. Il est entendu que le plan radial est perpendiculaire à l'axe 14, le plan axial s'étend axialement et radialement.

La paroi 34 peut présenter des surfaces annulaires de fixations d'aubes et/ou des séries d'orifices de fixation (non représentés) disposées en rangées annulaires pour la fixation des aubes statoriques 26. Les orifices de fixation peuvent être munis d'inserts (non représentés) pour renforcer le matériau composite du carter annulaire 28. Les inserts peuvent être intégrés dans l'épaisseur de la paroi 34 ou des brides 30.

Le carter annulaire 28 peut également être un support pour des couches annulaires de matériau abradable 36 qui sont disposées contre la paroi 34 et qui sont destinées à assurer une étanchéité avec les extrémités externes des aubes rotoriques 24. Les surfaces annulaires de fixations d'aubes et les couches d'abradable 36 peuvent former une alternance. Le carter annulaire 28 comprend un matériau composite, par exemple avec une matrice organique et des fibres de carbone. Le carter annulaire 28 comprend un renfort fibreux principal et un renfort fibreux auxiliaire.

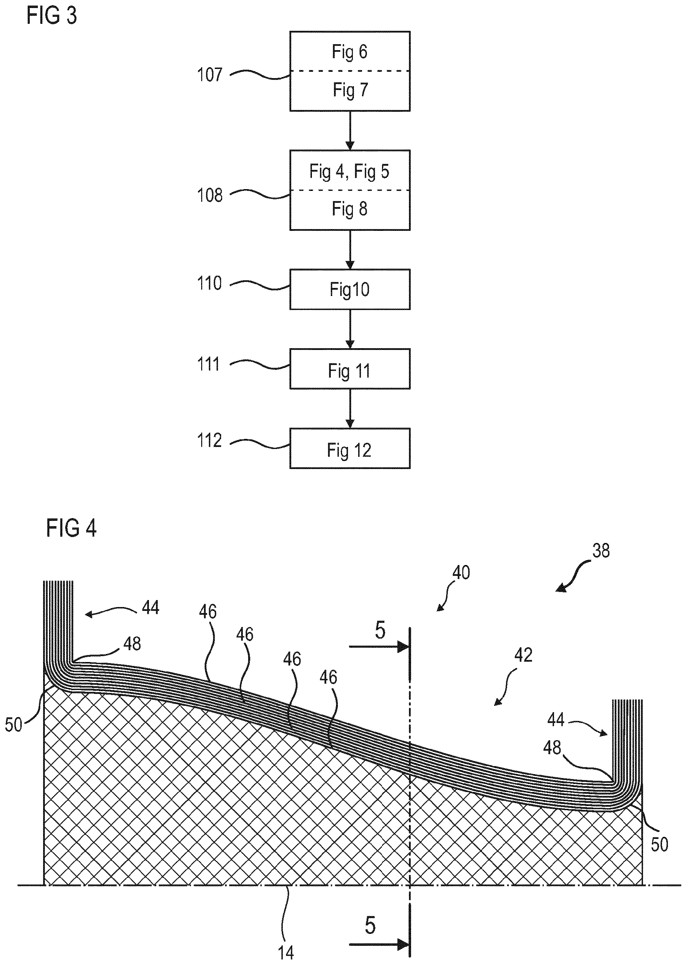

La figure 3 représente un diagramme du procédé de fabrication du carter annulaire composite.

Le procédé comprend la succession, éventuellement dans cet ordre, des étapes suivantes:
(a) une première étape de mise en place du renfort fibreux auxiliaire (107) ;
(b) une deuxième étape de mise en place du renfort fibreux principal (108) ;
(c) une troisième étape de fermeture du moule d'injection (110) ;
(d) une quatrième étape d'injection et de polymérisation (111) ;
(e) une cinquième étape de démoulage et éventuellement d'usinage (112).

La première étape 107 comprend une étape de fourniture ou réalisation d'un renfort fibreux auxiliaire. Elle peut être réalisée plusieurs fois de sorte à disposer un renfort auxiliaire dans chaque arête rentrante ou coin du moule. Eventuellement, elle peut consister à placer un renfort auxiliaire formant une boucle longeant le contour de la portion annulaire. Par exemple, le renfort auxiliaire peut longer deux brides axiales et deux brides annulaires.

La deuxième étape 108 comprend une étape de fourniture ou réalisation d'un renfort fibreux principal. Suivant une alternative de l'invention, les renforts peuvent être réalisés avant la première étape du procédé. Le renfort principal peut être réalisé à même le moule par empilement de plis fibreux ou par empilement de plis fibreux sur un support de préformage externe. Chaque pli peut être tissé de sorte à présenter à l'avance la forme qu'il doit occuper lorsqu'il est disposé dans le moule. Les plis peuvent être maintenus les uns aux autres en les cousant, en les collant ponctuellement.

Les étapes présentées ci-dessus ainsi que les éléments employés sont détaillés d'avantage dans les paragraphes suivants.

La figure 4 représente une coupe du renfort fibreux principal 38 du carter. Le présent enseignement pouvant être appliqué à tout carter de la turbomachine.

Le renfort fibreux principal 38 peut présenter une symétrie de révolution avec un profil de révolution par rapport à l'axe 14. Il peut être plat. Il comprend une préforme fibreuse 40, qui a été formée de sorte à ébaucher la forme du carter annulaire composite. La préforme 40 peut présenter une cloison circulaire 42, ou en arc de cercle, destinée à renforcer la paroi du carter annulaire, et au moins une, préférentiellement deux brides annulaires de fixation 44 qui s'étendent radialement et qui sont destinées à renforcer les brides annulaires du carter annulaire.

La préforme 40 comprend un empilement de plis fibreux 46, qui peuvent s'étendre sur la cloison 42, et sur au moins une ou plusieurs brides de fixation 44. Chaque pli 46 peut s'étendre sur une fraction axiale de la cloison 42. Ainsi, le nombre de plis 46 peut varier axialement. Le nombre de plis peut augmenter vers l'aval. Au moins un pli 46 peut être ajouté pour renforcer la jonction entre la cloison 42 et une des brides 44. La préforme 40 peut comprendre une couche avec un matelas fibreux qui présente, selon son épaisseur, plusieurs niveaux de fibres, par exemple au moins deux préférentiellement au moins quatre, plus préférentiellement au moins dix niveaux de fibres.

Les plis 46 peuvent comprendre des fibres de carbone, et/ou des fibres de graphite, et/ou des fibres de verre. Avantageusement, la préforme peut comprendre plusieurs types de plis. Par exemple, la préforme peut comprendre une couche centrale avec des plis en fibres de carbone, et au moins un pli avec des fibres de verre en surface, éventuellement pour éviter une corrosion galvanique.

Les plis 46 sont des plis tissés, ces derniers peuvent comprendre des fibres et/ou des faisceaux de fibres tissés selon deux directions, par exemple perpendiculaires. Chaque faisceau de fibres peut présenter plusieurs fibres selon sa section. Eventuellement, un pli fibreux présente trois directions de tissage.

La préforme 40 peut comprendre au moins cinq plis 46, préférentiellement au moins douze plis 46, plus préférentiellement au moins vingt plis 46 selon son épaisseur. Les plis 46 peuvent former un angle vif à la jonction entre la cloison 42 du côté radialement extérieur de la préforme 40. A l'intérieur, sous chaque bride annulaire 44, la préforme peut former un arrondi annulaire 50 ou coude qui résulte de l'enroulement des plis sur l'angle vif.

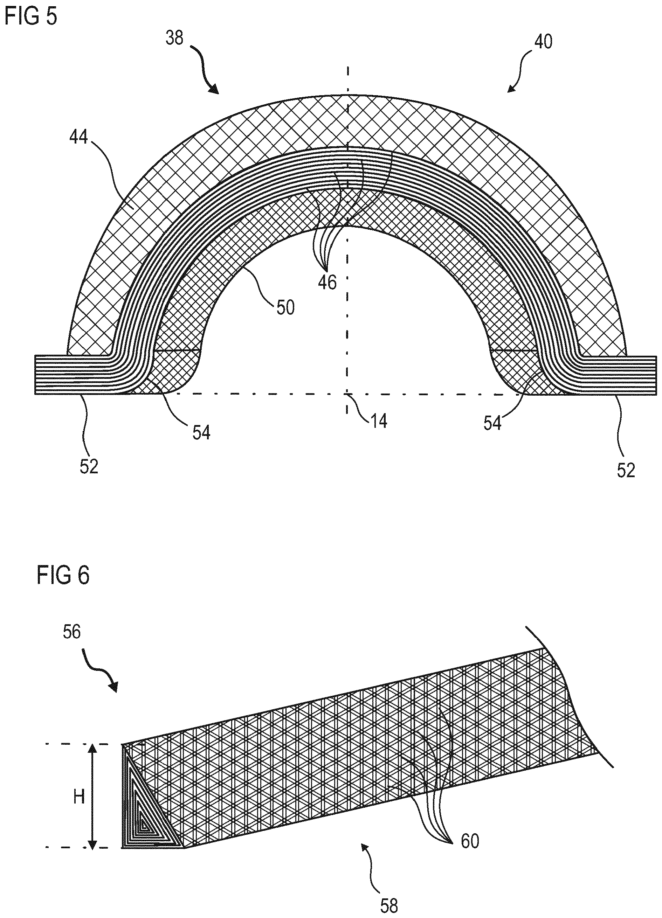

La figure 5 représente une coupe du renfort fibreux principal 38 du carter annulaire composite suivant l'axe 5-5 tracé sur la figure 4-4.

Le carter annulaire peut décrire un cercle. Il peut être un demi-carter annulaire qui décrit un demi-cercle, ou un segment annulaire de carter annulaire qui décrit une fraction de cercle ; tel un quart, un sixième, ou un huitième de cercle.

Le carter annulaire peut être divisé selon un ou plusieurs plans qui s'étendent suivant l'axe de rotation 14. Pour joindre les demi-carters ou les segments de carters, ceux-ci sont munis de brides axiales de fixation destinées à être fixées les unes aux autres, et peuvent former un cercle lisse, sans marche. Par conséquent, la cloison, et la paroi peuvent être des demi-tubes, et s'étendre sur un demi-cercle, ou être des fractions de cercle. L'assemblage de demi-carters ou des fractions de carter permet de décrire un cercle fermé.

Le renfort principal 38 du carter annulaire peut également décrire un demi-cercle de sorte à renforcer le demi-carter. Le renfort principal peut présenter des brides axiales de fixation 52, qui s'étendent radialement et qui peuvent suivre une sinusoïde. Le renfort principal 38 pouvant être réalisé par un empilement successif de plis fibreux 46, des arrondis axiaux 54 peuvent apparaître au bord de la paroi, à la jonction axiale avec les brides axiales, tout le long axialement des brides axiales 52.

La figure 6 représente une coupe du renfort fibreux auxiliaire 56 du carter.

Le renfort fibreux auxiliaire 56 comprend un noyau 58. Le noyau 58 peut être un toron de fibres 60, éventuellement tissé ou tressé tridimensionnellement. Ses fibres 60 peuvent décrire des spirales longeant l'arête. Les fibres 60 et/ou les faisceaux de fibres du noyau 58 sont de même nature que les fibres de la préforme. Par même nature on peut entendre de même matière, et/ou de même longueur et/ou de même diamètre.

Le renfort auxiliaire 56 peut comprendre des portions prolongeant radialement ou axialement le noyau 58. Le noyau 58 peut présenter un allongement et une section transversale selon un plan perpendiculaire à son allongement. Sa section transversale peut être généralement un polygone, tel un triangule, éventuellement rectangle et/ou isocèle. La hauteur maximale H du triangle du profil du noyau 58 est sensiblement égale à l'épaisseur d'une des brides et/ou de l'épaisseur de la paroi de la première préforme. Ladite hauteur est mesurée radialement lorsque le renfort auxiliaire 56 est disposé dans le moule, elle peut être comprise entre 60% et 140%, préférentiellement entre 90% et 110% de l'épaisseur d'une des brides et/ou de l'épaisseur de la paroi de la première préforme. Le noyau 58 peut présenter une densité en fibre essentiellement constante.

Les fibres 60 du noyau 58 peuvent être principalement orientées parallèlement à l'allongement du renfort auxiliaire 58. Chacune de leurs portions forme un angle inférieur à 45° par rapport à l'allongement du renfort auxiliaire, préférentiellement inférieur à 20°.

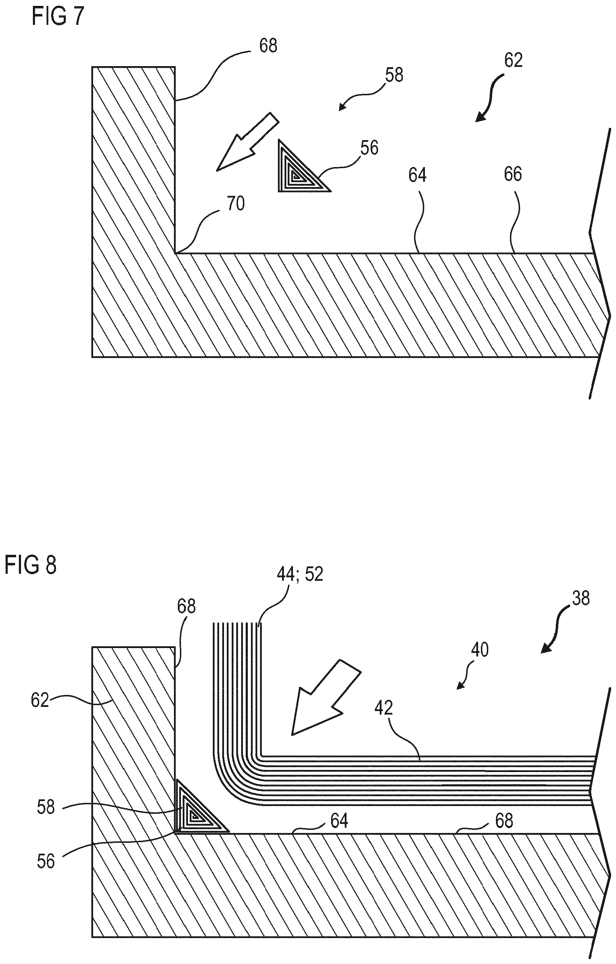

La figure 7 représente une première étape du procédé de fabrication du carter annulaire composite selon l'invention. Une portion de moule est représentée en coupe selon un plan passant par un axe qui correspond à l'axe 14.

Le procédé emploie un moule d'injection avec un premier moule 62. La première étape comprend la mise en place du renfort auxiliaire 56 à l'intérieur du premier moule 62, avec son noyau contre une surface de moulage 64. Le moule 62 peut être un moule permettant de réaliser un carter annulaire, un segment du carter annulaire ou une demi-coquille. Il peut présenter des surfaces de moulage générées par un profil de révolution. Le moule peut présenter une surface de moulage annulaire généralement tubulaire 66 qui est la conjuguée de la surface intérieure du carter annulaire. Bien que la surface de moulage tubulaire ici représentée soit droite, il est évident que dans la pratique elle peut présenter toute forme courbe permettant de réaliser une bride axiale ou une bride annulaire.

Le moule 62 peut également présenter une surface de moulage s'étendant radialement 68, qui est la conjuguée d'une surface de fixation d'une des brides. La surface tubulaire 66 et la surface radiale 68 forment un coin 70 ou angle rentrant 70 à leur jonction. Afin de combler ce coin 70, le renfort auxiliaire 56 y est appliqué.

Bien qu'un seul renfort auxiliaire 56 soit représenté, il est envisageable d'en appliquer d'autres, par exemple au niveau d'une bride opposée, ou au niveau de formes de marches.

La figure 8 représente une deuxième étape du procédé de fabrication du carter annulaire composite selon l'invention.

La deuxième étape comprend la mise en place du renfort fibreux principal 38, de sorte à ce que ce dernier recouvre la surface tubulaire 66 et la surface radiale 68 du moule 62, ainsi que le renfort auxiliaire 56, et d'éventuels autres renforts auxiliaires. Lors de cette étape, le renfort principal 38 rentre en contact du noyau 58 du renfort auxiliaire 56 au niveau d'une surface de contact avec un profil généralement droit.

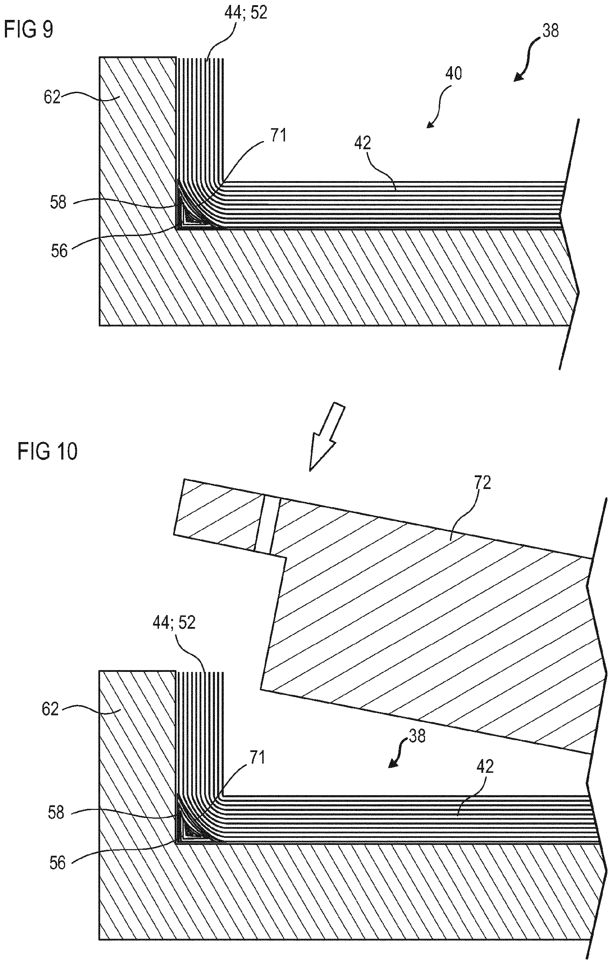

La figure 9 représente le renfort principal 38 et le renfort auxiliaire 56 lorsqu'ils sont tous deux en place dans le moule 62.

Ces renforts peuvent s'épouser sur la majorité, préférentiellement sur au moins 80%, plus préférentiellement sur la totalité de l'épaisseur de la bride 44 ou 52 et/ou sur la majorité, préférentiellement sur au moins 80%, plus préférentiellement sur la totalité de l'épaisseur de la cloison 42 du renfort principal 38. Lorsqu'ils s'épousent, ils se compressent mutuellement, le grand côté du triangle s'incurve, et l'arrondi (50, 54) à la jonction entre la bride et la cloison 42 du renfort principal s'écrase, s'aplatit. Les renforts peuvent s'épouser sur la majorité, préférentiellement la totalité de la hauteur radiale du noyau du renfort auxiliaire.

A l'interface 71 des préformes, des fibres des deux préformes peuvent traverser ladite interface 71, être intercalés suivant un même niveau. Elles peuvent s'imbriquer ce qui améliore la cohérence en combinaison avec la matrice.

La figure 10 représente une troisième étape du procédé de fabrication du carter annulaire composite selon l'invention.

La troisième étape du procédé comprend la fermeture du moule d'injection, ce dernier comprenant au moins un deuxième moule 72 ou contre-moule 72 qui est appliqué contre le renfort principal 38 et le compacte. Le contre-moule 72 peut être un moule maie. Le contre-moule 72 peut réduire l'épaisseur de la cloison et/ou l'épaisseur de la bride (44, 52) du renfort principal 38. Le moule 62 et le contre-moule 72 définissent entre eux une cavité de moulage reproduisant essentiellement la forme du carter annulaire. Lors de cette étape, le noyau 58 peut être à nouveau compacté. L'effet de la fermeture du moule peut permettre de réduire les épaisseurs des préformes d'au moins 5%, préférentiellement au moins 20%.

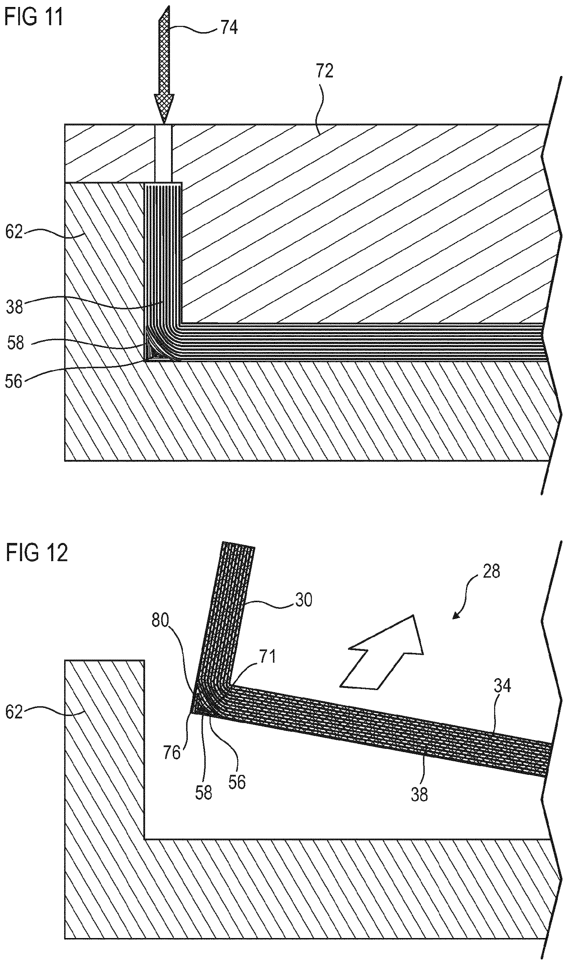

La figure 11 représente une quatrième étape du procédé de fabrication du carter annulaire composite selon l'invention.

La quatrième étape comprend l'injection d'une résine 74, notamment une résine organique, dans le moule d'injection. La résine peut être une résine thermoplastique telle de l'époxy, du polyétherimide (PEI), du polyétheréthercétone (PEEK). L'injection peut consister à imprégner les préformes, selon un procédé du type RTM (acronyme anglais pour Resin Transfer Molding). Le procédé peut comprendre une injection d'une résine chargée. Eventuellement, l'injection peut être assistée d'une aspiration.

Suite à l'injection, le moule peut être maintenu pendant une période d'au moins une heure à une température supérieure à 50°C, préférentiellement supérieure à 120°C. Suite à ces étapes, la résine polymérise et durcit et peut adhérer aux renforts ; formant ainsi un corps solide.

La figure 12 représente une cinquième étape du procédé de fabrication du carter annulaire composite 28 selon l'invention.

La cinquième étape comprend le démoulage du carter annulaire composite 28. Dans un premier temps, le contre moule est ôté du moule 62, puis un effort de démoulage est appliqué sur le carter pour l'extraire du moule.

Le carter 28 issu de moulage peut être usiné. Il peut être perforé au niveau des brides 30 pour réaliser des orifices de fixation, et/ou au niveau de la paroi 34 pour permettre le montage d'aubes. Eventuellement, les brides axiales et/ou annulaires peuvent être découpées pour enlever les extrémités hétérogènes, spécialement ajoutées pour améliorer la qualité des brides finies.

Une fois polymérisée, la matrice lie le renfort principal 38 et le renfort auxiliaire 56. Elle présente une continuité de matière à l'interface 71 entre les renforts (38 ; 56), ce qui permet de les solidariser. Cette configuration favorise l'ancrage des renforts. Le noyau du renfort auxiliaire 56 comprend des fibres qui s'étendent radialement, sur au moins 10 %, préférentiellement sur au moins toute, plus préférentiellement sur au moins deux fois l'épaisseur de la paroi 34. Ces fibres améliorent la résistance en compression radiale de l'arête et permettent à l'arrête de former un bloc. Ces fibres s'étendent depuis l'arête 76 du carter 28 jusqu'au renfort principal 38.

Le renfort fibreux principal 38 s'étend de manière continue le long de la paroi 38 et de la bride 30 en formant une portion coudée et généralement arrondie au niveau de l'arête. Le noyau 58 s'étend le long de l'arête 76 de manière à combler le volume entre l'arête et la portion coudée du renfort principal 38. L'interface 71 peut présenter un profil généralement courbe et sensiblement aplati. Les renforts (38 et 56) peuvent être configurés de sorte à ce que le carter 28 présente une continuité et une homogénéité de densité de fibre dans la jonction 80 entre la bride 30 et la paroi 34 et/ou le long des surface de la jonction 80. Cette homogénéité améliore la résistance mécanique et l'endurance du carter 28 qui peut être soumis à des vibrations, à des attaques chimiques à une température supérieure à 170 °C pendant le fonctionnement de la turbomachine.

Le rayon général de l'interface arrondie et/ou l'épaisseur de la paroi est/sont supérieur(s) à 1%, préférentiellement supérieur(s) à 2%, plus préférentiellement supérieur à 4%, éventuellement supérieur à 6% du rayon de l'arête vive.

Le carter 28 présente une arête vive 76 formant un angle saillant. Cette arête peut être intégrée dans la turbomachine, sans nécessiter d'usinage complémentaire. L'arête 76 peut être généralement perpendiculaire, ce qui permet de réaliser une jonction lisse lorsqu'elle est mise en concordance avec une arête correspondante. La réunion des deux arêtes permet de réaliser une surface de guidage d'un flux sans ressaut qui nuirait au bon écoulement du flux. Cette réunion peut également former une zone de fixation sans aspérité, par exemple pour venir y appuyer une plateforme d'aube en vue de son positionnement et de sa fixation.

## Revendications

1. Carter annulaire composite (28) de turbomachine (2), notamment de compresseur basse pression (4), comportant :
- une paroi (34) généralement circulaire ou en arc de cercle ;
- une bride de fixation (30) s'étendant radialement depuis un bord de la paroi (34), formant avec ladite paroi une arête (76) ;
- un renfort fibreux principal (38) s'étendant de manière continue le long de la paroi et de la bride en formant une portion coudée et arrondie au niveau de l'arête, le renfort fibreux principal (38) comprenant une préforme (40) faite d'une pluralité de plis (46), chaque pli (46) comprenant des fibres tissées ; et
- un renfort fibreux auxiliaire (56) s'étendant le long de l'arête (76);
- une matrice ;
le renfort auxiliaire (56) comprenant un noyau (58) s'étendant le long de l'arête (76) de manière à combler le volume entre l'arête et la portion coudée du renfort principal (38), le noyau du renfort auxiliaire (56) comprenant des fibres (60) qui s'étendent radialement depuis l'arête (76) jusqu'au renfort principal (38), lesdites fibres (60) étant de même nature que les fibres tissées des plis (46) du renfort principal.

2. Carter (28) selon la revendication 1, **caractérisé en ce que** le noyau (58) du renfort auxiliaire (56) comprend un toron tressé ou tissé, éventuellement de manière tridimensionnelle.

3. Carter (28) selon l'une des revendications 1 à 2, **caractérisé en ce que** la section transversale du noyau du renfort auxiliaire (56) présente un profil généralement en triangle, éventuellement en triangle rectangle dont l'angle droit est disposé au niveau de l'arête vive (76).

4. Carter (28) selon l'une des revendications 1 à 3, **caractérisé en ce que** le renfort principal (38) et le renfort auxiliaire (56) sont essentiellement en contact sur toute l'épaisseur radiale de la paroi (34) et/ou sur toute l'épaisseur axiale de la bride de fixation (30).

5. Carter (28) selon l'une des revendications 1 à 4, **caractérisé en ce que** le noyau du renfort auxiliaire (56) présente une densité en fibres homogène perpendiculairement à son allongement.

6. Carter (28) selon l'une des revendications 1 à 5, **caractérisé en ce que** la bride de fixation est une bride annulaire de fixation (30) et/ou une bride axiale de fixation, préférentiellement le carter annulaire (28) est un demi-carter annulaire s'étendant sur un demi-cercle qui comprend des brides axiales disposées latéralement sur la portion cylindrique (34) et des brides annulaires opposées disposées aux extrémités axiales de la portion cylindrique (34).

7. Carter (28) selon l'une des revendications 1 à 6, **caractérisé en ce que** les fibres (60) du noyau (58) du renfort auxiliaire (56) s'étendent principalement parallèlement à l'arête (76), préférentiellement chaque portion de fibres (60) du renfort auxiliaire (56) est inclinée par rapport à l'arête d'un angle inférieur à 40°, plus préférentiellement inférieur à 20°.

8. Carter (28) selon l'une des revendications 1 à 7, **caractérisé en ce que** les fibres (60) du renfort principal (38) et du noyau du renfort auxiliaire (56) sont de même longueur et/ou de même diamètre.

9. Carter (28) selon l'une des revendications 1 à 8, **caractérisé en ce que** les fibres du renfort principal (38) et du noyau du renfort auxiliaire (56) sont imbriquées à l'interface (71) entre le renfort principal (38) et le renfort auxiliaire (56), préférentiellement les fibres des renforts sont agencées en faisceaux de fibres qui sont imbriqués au travers de l'interface.

10. Carter (28) selon l'une des revendications 1 à 9, **caractérisé en ce que** le renfort principal (38) et le noyau du renfort auxiliaire (56) présentent chacun une densité de fibres (60) homogène, préférentiellement le rapport des densités de fibres des renforts est compris entre 0,5 et 1,50; préférentiellement compris entre 0,80 et 1,20 ; plus préférentiellement compris entre 0,95 et 1,05.

11. Turbomachine (2) comprenant un carter annulaire composite (28), **caractérisée en ce que** le carter annulaire composite (28) est conforme à l'une des revendications 1 à 10, préférentiellement la matrice est une matrice organique à base de polyétherimide, d'époxy, ou de polyétheréthercétone ; le renfort principal (38) est une préforme fibreuse comprenant un empilement de plis fibreux (46) avec des fibres de carbone et des fibres de verre, chaque pli fibreux comprenant des fibres (60) agencées en faisceaux de fibres tissés selon au moins deux directions.

12. Turbomachine (2) selon la revendication 11, **caractérisée en ce qu'**elle comprend un carter intermédiaire de soufflante (32), un compresseur basse pression (4) avec des rangées annulaires d'aubes statoriques (26) et un bec de séparation (22), le carter annulaire (28) comprenant une bride annulaire de fixation (30) à chaque extrémité axiale, dont une bride amont et une bride aval, le carter annulaire (28) présentant une réduction de rayon vers l'aval, préférentiellement le carter annulaire (28) est une structure principale externe du compresseur (4) sur laquelle sont fixées les rangées d'aubes (26), le bec de séparation (22) via la bride amont, le carter intermédiaire de soufflante (32) via la bride aval, le carter annulaire (28) comprenant en outre une alternance de couches annulaires de matériau abradable (36) et de surfaces annulaires de fixation d'aubes, le carter annulaire (28) est formé de demi-coquilles séparées par un plan s'étendant axialement.

13. Procédé de fabrication d'un carter annulaire composite (28) de turbomachine (2) qui comprend une paroi (34) de profil généralement circulaire ou en arc de cercle, une bride de fixation (30) s'étendant radialement depuis un bord de la paroi (34) et formant avec la paroi une arête (76), le procédé comprenant les étapes suivantes :
(a) mise en place (107) d'un renfort auxiliaire (56) dans un coin (70) d'une surface de moulage (64) d'un moule d'injection, ledit coin formant l'arête (76);
(b) mise en place (108) d'un renfort principal (38) contre la surface de moulage (64) en épousant le renfort auxiliaire (56) au niveau du coin (70), le renfort fibreux principal (38) comprenant une préforme (40) faite d'une pluralité de plis (46), chaque pli (46) comprenant des fibres tissées;
(c) fermeture du moule d'injection;
(d) injection d'une résine (74) et polymérisation de la résine (74) ;
(e) démoulage du carter (28), procédé dans lequel le noyau du renfort auxiliaire (56) comprend des fibres (60) qui, après l'étape (b), s'étendent radialement depuis l'arête (76) jusqu'au renfort principal (38), lesdites fibres (60) étant de même nature que les fibres tissées des plis (46) du renfort principal.

14. Procédé selon la revendication 13, **caractérisé en ce qu'**avant l'étape (b) de mise en place (108) d'un renfort principal (38), ledit renfort (38) est produit avec un arrondi (50 ; 54) destiné à venir en contact d'une surface de contact du renfort auxiliaire (56), préférentiellement à l'issue de l'étape (b) l'arrondi du renfort principal s'aplatit et la surface de contact du renfort auxiliaire s'incurve.

15. Procédé selon l'une des revendications 13 à 14, **caractérisé en ce que** lors de l'étape (c) fermeture du moule d'injection, le renfort principal (38) est compacté et/ou le renfort principal (38) et le noyau (58) se compactent mutuellement.

## Patentansprüche

1. Zusammengesetztes ringförmiges Gehäuse (28) einer Turbomaschine (2), insbesondere eines Niederdruckverdichters (4), umfassend:
- eine Wand (34), die allgemein kreisförmig oder kreisbogenförmig ist;
- einen Befestigungsflansch (30), der sich radial von einer Kante der Wand (34) erstreckt und mit der Wand einen Grat (76) bildet;
- eine Hauptfaserverstärkung (38), die sich kontinuierlich entlang der Wand und des Flansches erstreckt und einen gebogenen und abgerundeten Abschnitt auf Höhe des Grats bildet, wobei die Hauptfaserverstärkung (38) eine Vorform (40) umfasst, die aus mehreren Lagen besteht (46), wobei jede Lage (46) gewebte Fasern umfasst; sowie
- eine Hilfsfaserverstärkung (56), die sich entlang des Grats (76) erstreckt;
- eine Matrix;
- einen Kern (58), der sich entlang der Rippe (76) erstreckt, um das Volumen zwischen dem Grat und dem gebogenen Abschnitt der Hauptverstärkung (38) zu füllen, wobei der Kern der Hilfsverstärkung (56) Fasern (60) umfasst, die sich radial von dem Grat (76) zur Hauptverstärkung (38) erstrecken, wobei die Fasern (60) von derselben Natur sind wie die gewebten Fasern der Lagen (46) der Hauptverstärkung.

2. Gehäuse (28) nach Anspruch 1, **dadurch gekennzeichnet, dass** der Kern (58) der Hilfsverstärkung (56) aus einem geflochtenen oder gewebten Strang, gegebenenfalls dreidimensional, besteht.

3. Gehäuse (28) nach einem der Ansprüche 1 bis 2, **dadurch gekennzeichnet, dass** der Querschnitt des Kerns der Hilfsverstärkung (56) ein im Allgemeinen dreieckiges, gegebenenfalls rechtwinkliges Profil aufweist, dessen rechter Winkel in Höhe des scharfen Grats (76) angeordnet ist.

4. Gehäuse (28) nach einem der Ansprüche 1 bis 3, **dadurch gekennzeichnet, dass** die Hauptverstärkung (38) und die Hilfsverstärkung (56) im Wesentlichen über die gesamte radiale Dicke der Wand (34) und/ oder über die gesamte axiale Dicke des Befestigungsflansches (30) in Kontakt stehen.

5. Gehäuse (28) nach einem der Ansprüche 1 bis 4, **dadurch gekennzeichnet, dass** der Kern der Hilfsverstärkung (56) senkrecht zu seiner Dehnung eine homogene Faserdichte aufweist.

6. Gehäuse (28) nach einem der Ansprüche 1 bis 5, **dadurch gekennzeichnet, dass** der Befestigungsflansch ein ringförmiger Befestigungsflansch (30) und/ oder ein axialer Befestigungsflansch ist, vorzugsweise das ringförmige Gehäuse (28) ein sich über einen Halbkreis erstreckendes ringförmiges Halbgehäuse ist, das seitlich am zylindrischen Abschnitt angeordnete axiale Flansche umfasst (34) und gegenüberliegende ringförmige Flansche, die an den axialen Enden des zylindrischen Abschnitts (34) angeordnet sind.

7. Gehäuse (28) nach einem der Ansprüche 1 bis 6, **dadurch gekennzeichnet, dass** die Fasern (60) des Kerns (58) der Hilfsverstärkung (56) im Wesentlichen parallel zum Grat (76) verlaufen, vorzugsweise jeder Abschnitt der Fasern (60) der Hilfsverstärkung (56) relativ zum Grat in einem Winkel kleiner als 40 °, besonders bevorzugt kleiner als 20° geneigt ist.

8. Gehäuse (28) nach einem der Ansprüche 1 bis 7, **dadurch gekennzeichnet, dass** die Fasern (60) der Hauptverstärkung (38) und des Kerns der Hilfsverstärkung (56) die gleiche Länge und/ oder den gleichen Durchmesser aufweisen.

9. Gehäuse (28) nach einem der Ansprüche 1 bis 8, **dadurch gekennzeichnet, dass** die Fasern der Hauptverstärkung (38) und des Kerns der Hilfsverstärkung (56) an der Schnittfläche (71) zwischen der Hauptverstärkung (38) und der Hilfsverstärkung (56) verschachtelt sind, vorzugsweise die Fasern der Verstärkungen in Faserbündeln angeordnet sind, die über die Schnittfläche verschachtelt sind.

10. Gehäuse (28) nach einem der Ansprüche 1 bis 9, **dadurch gekennzeichnet, dass** die Hauptverstärkung (38) und der Kern der Hilfsverstärkung (56) jeweils eine homogene Faserdichte (60) aufweisen, wobei vorzugsweise das Verhältnis der Faserdichten der Verstärkungen zwischen 0,5 und 1,50, vorzugsweise zwischen 0,80 und 1,20, besonders bevorzugt zwischen 0,95 und 1,05 liegt.

11. Turbomaschine (2) mit einem zusammengesetzten ringförmigen Gehäuse (28), **dadurch gekennzeichnet, dass** das zusammengesetzte ringförmige Gehäuse (28) einem der Ansprüche 1 bis 10 entspricht, wobei vorzugsweise die Matrix eine organische Matrix auf Basis von Polyetherimid, Epoxy oder Polyetheretherketon ist, die Hauptverstärkung (38) eine Faservorform ist, die einen Stapel von Faserlagen (46) mit Kohlefasern und Glasfasern umfasst, wobei jede Faserlage Fasern (60) umfasst, die in Faserbündeln angeordnet sind, die in mindestens zwei Richtungen gewebt sind.

12. Turbomaschine (2) nach Anspruch 11, **dadurch gekennzeichnet, dass** sie ein Lüfterzwischengehäuse (32), einen Niederdruckverdichter (4) mit ringförmigen Reihen von Statorschaufeln (26) und eine Trenndüse (22) aufweist, wobei das ringförmige Gehäuse (28) an jedem axialen Ende einen ringförmigen Befestigungsflansch (30) aufweist, mit einem stromaufwärtigen Flansch und einem stromabwärtigen Flansch, wobei das ringförmige Gehäuse (28) zum stromabwärtigen Ende hin eine Radiusverringerung aufweist, vorzugsweise ist das ringförmige Gehäuse (28) eine äußere Hauptstruktur des Verdichters (4), an der die Schaufelreihen (26), die Trenndüse (22) über den stromaufwärtigen Flansch, das Lüfterzwischengehäuse (32) über den stromabwärtigen Flansch befestigt sind, wobei das ringförmige Gehäuse (28) ferner abwechselnde ringförmige Schichten aus abreibbarem Material (36) und ringförmige Schaufelbefestigungsflächen umfasst, wobei das ringförmige Gehäuse (28) aus Halbschalen gebildet ist, die durch eine sich axial erstreckende Ebene getrennt sind.

13. Verfahren zur Herstellung eines zusammengesetzten ringförmigen Gehäuses (28) für eine Turbomaschine (2), die eine Wand (34) mit allgemein kreisförmigem oder bogenförmigem Profil aufweist einen Montageflansch (30), der sich radial von einem Rand der Wand (34) erstreckt und mit der Wand einen Steg (76) bildet, wobei das Verfahren die folgenden Schritte umfasst:
(a) Anordnen (107) einer Hilfsverstärkung (56) in einer Ecke (70) einer Formfläche (64) einer Spritzgussform, wobei die Ecke den Grat (76) bildet
(b) Anordnen (108) einer Hauptverstärkung (38) an die Formfläche (64) durch Anpassung an die Hilfsverstärkung (56) an der Ecke (70), wobei die Hauptfaserverstärkung (38) einen Vorformling (40) aus einer Vielzahl von Lagen (46) umfasst, wobei jede Lage (46) gewebte Fasern umfasst
(c) Schließen der Spritzgussform;
(d) Injizieren eines Harzes (74) und Aushärten des Harzes (74)
(e) Entnahme des Gehäuses (28) aus der Gussform,
Verfahren, bei dem der Kern der Hilfsverstärkung (56) Fasern (60) aufweist, die sich nach Schritt (b) radial vom Grat (76) zur Hauptverstärkung (38) erstrecken, wobei die Fasern (60) von der gleichen Art sind wie die gewebten Fasern der Lagen (46) der Hauptverstärkung.

14. Verfahren nach Anspruch 13, **dadurch gekennzeichnet, dass** vor dem Schritt (b) des Anordnens (108) einer Hauptverstärkung (38) die Verstärkung (38) mit einer Rundung (50; 54) hergestellt wird, die dazu bestimmt ist, mit einer Kontaktfläche der Hilfsverstärkung (56) in Kontakt zu kommen, wobei sich vorzugsweise am Ende des Schritts (b) die Rundung der Hauptverstärkung abflacht und die Kontaktfläche der Hilfsverstärkung krümmt.

15. Verfahren nach einem der Ansprüche 13 bis 14, **dadurch gekennzeichnet, dass** im Schritt (c) des Schließens der Spritzgussform die Hauptverstärkung (38) verdichtet wird und/oder die Hauptverstärkung (38) und der Kern (58) sich gegenseitig verdichten.

## Claims

1. Composite annular casing (28) of a turbomachine (2), in particular of a low-pressure compressor (4), including:
- a wall (34) of generally circular form or in a circular arc;
- a mounting flange (30) extending radially from one side of the wall (34), forming an edge (76) together with the said wall;
- a main fibrous reinforcement (38) extending in a continuous manner along the wall and of the flange and forming an angled portion and rounded in the area of the edge, the main fibrous reinforcement (38) comprising a preform (40) made of a plurality of folds (46), each fold (46) comprising woven fibres, and
- an auxiliary fibrous reinforcement (56) extending along the edge (76);
- a matrix;
the auxiliary reinforcement (56) comprising a core (58) extending along the edge (76) in such a way as to occupy the volume between the edge and the angled portion of the main reinforcement (38), the core of the auxiliary reinforcement (56) comprises fibres (60) which extend radially from the edge (76) as far as the main reinforcement (38), said fibres (60) being of the same nature than the woven fibres of the folds (46) of the main reinforcement.

2. Casing (28) according to claim 1, **characterized in that** the core (58) of the auxiliary reinforcement (56) comprises a braided or woven strand, optionally in a three-dimensional manner.

3. Casing (28) according to one of claims 1 and 2, **characterized in that** the transverse section of the core of the auxiliary reinforcement (56) presents a profile of generally triangular form, optionally of a right-angled triangle of which the right angle is arranged in the area of the sharp edge (76).

4. Casing (28) according to one of claims 1 to 3, **characterized in that** the main reinforcement (38) and the auxiliary reinforcement (56) are essentially in contact over the whole of the radial thickness of the wall (34) and/or over the whole of the axial thickness of the mounting flange (30).

5. Casing (28) according to one of claims 1 to 4, **characterized in that** the core of the auxiliary reinforcement (56) presents a homogeneous fibre density perpendicular to its prolongation.

6. Casing (28) according to one of claims 1 to 5, **characterized in that** the mounting flange is an annular mounting flange (30) and/or an axial mounting flange, the annular casing (28) preferably being an annular case-half extending over a semi-circle which comprises axial flanges arranged laterally on the cylindrical portion (34) and opposing annular flanges arranged at the axial extremities of the cylindrical portion (34).

7. Casing (28) according to one of claims 1 to 6, **characterized in that** the fibres (60) of the core (58) of the auxiliary reinforcement (56) extend mainly parallel to the edge (76), each portion of fibres (60) of the auxiliary reinforcement (56) preferably being inclined in relation to the edge at an angle of less than 40°, and more preferably of less than 20°.

8. Casing (28) according to one of claims 1 to 7, **characterized in that** the fibres (60) of the main reinforcement (38) and of the core of the auxiliary reinforcement (56) are of the same length and/or of the same diameter.

9. Casing (28) according to one of claims 1 to 8, **characterized in that** the fibres of the main reinforcement (38) and of the core of the auxiliary reinforcement (56) are intertwined at the interface (71) between the main reinforcement (38) and the auxiliary reinforcement (56), the fibres of the reinforcements preferably being arranged in bundles of fibres which are intertwined across the interface.

10. Casing (28) according to one of claims 1 to 9, **characterized in that** the main reinforcement (38) and the core of the auxiliary reinforcement (56) each have a homogeneous density of the fibres (60), the ratio of the densities of the fibres of the reinforcements preferably being between 0.5 and 1.50; preferably between 0.80 and 1.20; more preferably between 0.95 and 1.05.

11. Turbomachine (2) comprising a composite annular casing (28), **characterized in that** the composite annular casing (28) is in accordance with one of claims 1 to 10, the matrix preferably being an organic matrix on the basis of polyetherimide, epoxy, or polyether ether ketone; the main reinforcement (38) being a fibrous preform comprising a stack of fibrous folds (46) with carbon fibres and glass fibres, each fibrous fold comprising fibres (60) arranged in bundles of woven fibres in at least two directions.

12. Turbomachine (2) according to claim 11, **characterized in that** it comprises a intermediate blower casing (32), a low-pressure compressor (4) with annular rows of stationary blades (26) and a separation nose (22), the annular casing (28) comprising an annular mounting flange (30) at each axial extremity, including an upstream flange and an downstream flange, the annular casing (28) having a reduction in its radius in the downstream direction, the annular casing (28) preferably being an external principal structure of the compressor (4) to which the rows of blades (26) are fixed, the separation nose (22) via the upstream flange, the intermediate blower casing (32) via the downstream flange, the annular casing (28) further comprising an alternation of annular layers of abradable material (36) and annular surfaces for the mounting of the blades, the annular casing (28) being formed from half shells separated by an axially extending plane.

13. Method of manufacturing a composite annular casing (28) of a turbomachine (2) which comprises a wall (34) presenting a generally circular profile or in a circular arc, a mounting flange (30) extending radially from one side of the wall (34) and forming together with the wall an edge (76), the method comprising the following steps:
(a) positioning (107) of an auxiliary reinforcement (56) in a corner (70) of a moulding surface (64) of an injection mould, said corner forming the edge (76);
(b) positioning (108) of a main reinforcement (38) against the moulding surface (64) by adapting their form to that of the auxiliary reinforcement (56) in the area of the corner (70), the main fibrous reinforcement (38) comprising a preform (40) made of a plurality of folds (46), each fold (46) comprising woven fibres;
(c) closing of the injection mould;
(d) injection of a resin (74) and polymerization of the resin (74);
(e) demoulding of the casing (28),
method wherein the core of the auxiliary reinforcement (56) comprises fibres (60) which, after the step (b), extend radially from the edge (76) to the main reinforcement (38), said fibres (60) being of the same nature than the woven fibres of the folds (46) of the main reinforcement

14. Method according to Claim 13, **characterized in that**, before the step (b) of positioning (108) a main reinforcement (38), said reinforcement (38) is produced with a rounding (50; 54) intended to come into contact with a contact surface of the auxiliary reinforcement (56), preferably on completion of the step (b), the rounding of the main reinforcement being flattened and the contact surface of the auxiliary reinforcement being curved inwards.

15. Method according to one of claims 13 and 14, **characterized in that**, in the course of the step (c) of closing of the injection mould, the main reinforcement (38) is compacted and/or the main reinforcement (38) and the core (58) are compacted mutually.
